# EUROPÄISCHE PATENTSCHRIFT

(11) **EP 2 557 294 B1**
(45) Veröffentlichungstag und Bekanntmachung des Hinweises auf die Patenterteilung: **23.03.2022**
(21) Anmeldenummer: 12179324.4
(22) Anmeldetag: 05.08.2012
(51) Int. Cl.: F02B 41/04, F02B 75/04, F02B 33/22, F02B 47/02, F02B 25/04

(54) **Verbrennungsmotor**
Combustion Engine
Moteur à combustion

(30) Priorität: 08.08.2011 DE 102011052502
(43) Veröffentlichungstag der Anmeldung: 13.02.2013
(73) Patentinhaber: v. Görtz & Finger Techn. Entwicklungs GmbH, 36110 Schlitz (DE)
(72) Erfinder: Graf von Schlitz, gen. von Görtz, Rüdiger Maria, 36110 Schlitz (DE); Finger, Ulrich, 87647 Oberthingau (DE)
(74) Vertreter: Hutzelmann, Gerhard

(56) Entgegenhaltungen:
- EP-A1- 0 450 509
- EP-A1- 0 756 076
- EP-A1- 1 260 687
- BE-A- 431 587
- DE-A1- 10 062 835
- DE-A1- 10 203 185
- DE-U1- 9 014 000
- DE-U1- 9 209 897
- JP-A- 58 035 227

## Beschreibung

Die Erfindung bezieht sich auf einen Verbrennungsmotor mit wenigstens einem Brennraum und einem jedem Brennraum zugeordneten Kolben, einem oder mehreren Einlass- und Auslassventilen, wobeiwenigstens eine Einspritzdüse und vorzugsweise eine Zündeinrichtung vorgesehen ist und wobei eine Einspritzvorrichtung für ein weiteres Fluid und eine zusätzliche Auslasseinrichtung in der Zylinderwand im Bereich des unteren Totpunktes für das weitere entspannte Fluid vorgesehen ist, wobei die Einspritzvorrichtung und die zusätzliche Auslasseinrichtung eine Spülvorrichtung für den/die einzelnen Brennräume bilden.

Es sind verschiedene Verbrennungsmotore dieser Bauart bekannt, die jedoch alle eine vergleichsweise geringen Wirkungsgrad aufweisen. Nur ein Bruchteil der im Brennstoff zur Verfügung stehenden Energie wird in mechanische Arbeit umgesetzt.

So ist beispielsweise aus der DE 90 14 000.1 U1, der DE 100 62 835 A1, der EP 0 450 509 A1, der EP 0 756 076 A1 und der EP 1 260 687 A1 ein Verbrennungsmotor der genannten Art bekannt.

Aufgabe der Erfindung ist es daher, einen solchen Verbrennungsmotor zu optimieren und so den Wirkungsgrad zu verbessern.

Diese Aufgabe wird erfindungsgemäß dadurch gelöst, daß die Abfolge der Arbeitsschritte derart vorgesehen ist, dass in einem ersten Arbeitstakt Verbrennungsluft komprimiert wird, im Bereich des oberen Totpunktes Kraftstoff eingespritzt und gezündet wird, im zweiten Arbeitstakt das Verbrennungsgas expandiert, im dritten Arbeitstakt das heiße Verbrennungsgas durch das Auslassventil (5) ausgestoßen wird, nach Ausstoß der heißen Verbrennungsgase, also nach Beendigung des dritten Arbeitstaktes im oberen Totpunkt das Auslassventil (5) geschlossen und das weitere, überhitzte Fluid eingespritzt und nach der Expansion, zum Ende des vierten Arbeitstaktes, mittels der Spülvorrichtung im expandierten Zustand aus dem Zylinder durch Einblasen neuer Verbrennungsluft ausgetrieben wird.

Durch eine Spülung wird ein homogeneres zündfähiges Gemisch erzielt und durch das Fluid eine weitere Ausnutzung der verbliebenen thermischen Energie gewährleistet.

Zur Ausführung des Verfahrens wird ein Verbrennungsmotor mit wenigstens einem Brennraum und einem jedem Brennraum zugeordneten Kolben, einem oder mehreren Einlass- und Auslassventilen, wobei wenigstens eine Einspritzdüse und vorzugsweise eine Zündeinrichtung vorgesehen ist und wobei eine Einspritzvorrichtung für ein weiteres Fluid und eine zusätzliche Auslasseinrichtung in der Zylinderwand im Bereich des unteren Totpunktes für das weitere entspannte Fluid vorgesehen ist, wobei die Einspritzvorrichtung und die zusätzliche Auslasseinrichtung eine Spülvorrichtung für den/die einzelnen Brennräume bilden, wobei die Abfolge der Arbeitsschritte derart vorgesehen ist, dass in einem ersten Arbeitstakt Verbrennungsluft komprimiert wird, im Bereich des oberen Totpunktes Kraftstoff eingespritzt und gezündet wird, im zweiten Arbeitstakt das Verbrennungsgas expandiert, im dritten Arbeitstakt das heiße Verbrennungsgas durch das Auslassventil ausgestoßen wird, nach Ausstoß der heißen Verbrennungsgase, also nach Beendigung des dritten Arbeitstaktes im oberen Totpunkt das Auslassventil geschlossen und das weitere, überhitzte Fluid eingespritzt und nach der Expansion, zum Ende des vierten Arbeitstaktes, mittels der Spülvorrichtung im expandierten Zustand aus dem Zylinder durch Einblasen neuer Verbrennungsluft ausgetrieben wird.

Dabei hat es sich als sehr vorteilhaft erwiesen, wenn der Brennraum als Zylinder und der Kolben als Hubkolben ausgebildet ist, dem eine Kurbelwelle zugeordnet ist, die mit Pleueln miteinander verbunden sind und so ein Hubkolbenmotor geschaffen wird.

Damit lassen sich bestehende und erprobte Motorenkonzepte weiterverwenden und an die vorliegende Erfindung anpassen.

Äußerst vorteilhaft ist es erfindungsgemäß auch, wenn die Einlass- und/oder Auslassvorrichtung für entspanntes Fluid als Öffnungen in der Zylinderwandung ausgebildet ist, wobei die Einlass- und/oder Auslassvorrichtung durch den Hubkolben und/oder Ventile gesteuert werden können.

Durch die zusätzliche Fluideinspritzung, bei der das Fluid expandiert und damit abgekühlt wird, wird die Brennraumtemperatur gesenkt, der Brennraum gespült und damit die Zylinderfüllung verbessert. Das expandierte Fluid, das beispielsweise Wasserdampf sein kann, wird beispielsweise durch Verbrennungsluft aus dem Zylinder ausgetrieben. Durch die in der Zylinderwandung angeordneten Öffnungen kann eine sehr gute Durchströmung des Zylinders erzielt werden.

Durch die Steuerung der Öffnungen wird ein sicheres Funktionieren bei gleichzeitig sehr gute Brennraumfüllung und -spülung sichergestellt.

Eine weitere erfindungsgemäß sehr vorteilhafte Ausgestaltung der Erfindung liegt auch vor, wenn der Anlenkpunkt der Pleuel an der Kurbelwelle mit einem Exzenter, einem Planetenradgetriebe oder dergleichen versehen ist, wobei der Exzenter bzw. das Planetenradgetriebe durch die Drehung der Kurbelwelle und/oder von außen steuerbar ausgebildet sein kann.

Dadurch kann die effektive Länge des Pleuels variiert werden. Damit kann eine automatische Verstellung zum Beispiel in Abhängigkeit des jeweils anliegenden Arbeitstaktes erfolgen.

Eine weitere sehr vorteilhafte Ausgestaltung liegt auch vor, wenn ein Knickpleuel vorgesehen ist, mit dessen Hilfe die effektive Pleuellänge einstellbar ist.

Auch hiermit wurden sehr gute Erfolge erzielt um beispielsweise je nach anliegendem Arbeitstakt die Öffnungen in der Zylinderwandung im unteren Totpunkt zu verschließen oder zu öffnen.

Äußerst vorteilhaft ist es erfindungsgemäß auch, wenn eine Einrichtung vorgesehen ist, die die Pleuellänge im Verhältnis bis etwa 1:2 zur Kurbelwellenumdrehung in ihrer Länge verändert.

Damit wird erreicht, daß die Pleuellänge bei vier Arbeitstakten des Motors genau einmal im unteren Totpunkt kurz und einmal lang ist.

Eine weitere sehr vorteilhafte Ausgestaltung liegt auch vor, wenn Ventile für das entspannte Fluid vorgesehen sind.

Auch mit Ventilen lässt sich eine sehr gute Durchströmung erzielen.

Erfindungsgemäß ist es äußerst vorteilhaft, wenn die Ventile mechanisch gesteuert ausgebildet sind, beispielsweise über eine oder mehrere Nockenwellen.

Damit können die Ventile auf einfache Art und Weise sehr präzise gesteuert werden.

Eine weitere sehr vorteilhafte Ausgestaltung liegt auch vor, wenn die Ventile elektrisch, piezoelektrisch, elektromechanisch, hydraulisch und/oder pneumatisch gesteuert ausgebildet und damit einzeln ansteuerbar ausgebildet sind.

Auf diese Art und Weise lassen sich die Ventile unabhängig voneinander steuern, wobei eine hochgenaue und an die jeweiligen Betriebszustände anpassbare Steuerung gegeben ist.

Eine ebenfalls sehr vorteilhafte Fortbildung der Erfindung liegt auch vor, wenn die Verbrennungsluft über Öffnungen in der Brennraumwandung zugeführt wird.

Damit wird eine gleichmäßigere und homogenere Brennraumfüllung erzielt.

Dabei ist es sehr vorteilhaft, wenn die Öffnungen durch den Kolben und/oder Ventile verschlossen und geöffnet werden können, wobei die Ventile auch extern angeordnet sein können.

Beide Varianten bieten Vorteile. Wenn die Öffnungen durch den Kolben verschlossen und geöffnet werden, findet eine Zwangssteuerung statt. Wenn jedoch Ventile vorgesehen werden lässt sich der genaue Öffnungs- und Schließungszeitpunkt bestimmen und einstellen.

Eine dabei ebenfalls sehr vorteilhafte Ausgestaltung liegt darin, daß die Verbrennungsluft den Brennraum wenigstens teilweise umspült, bevor diese in den Brennraum geleitet wird.

Durch diese Ausgestaltung wird der Brennraum gekühlt. Auf eine Wasserkühlung kann oftmals verzichtet werden.

Gemäß einer weiteren Fortbildung der Erfindung ist es auch äußerst vorteilhaft, wenn eine Einrichtung zur Vorverdichtung von Spül- bzw. Ansaugluft vorgesehen ist.

Damit werden die Spülzeiten verkürzt, da die benötigte Luft schneller in den Zylinder eingebracht werden kann.

Dabei hat es sich als sehr vorteilhaft erwiesen, wenn diese Einrichtung als separater Zylinder ausgebildet ist.

Ein solcher Zylinder arbeitet sehr effektiv. Dieser Zylinder kann als 2-Takter laufen. Zudem ist es denkbar, daß dann auch die Verbrennungszylinder als 2-Takter laufen können, auch wenn Treibstoffe wie beispielsweise Diesel genutzt werden.

Dabei hat es sich als äußerst vorteilhaft erwiesen, wenn der separate Zylinder das doppelte oder mehrfache Volumen eines Verbrennungszylinders aufweist

Ebenfalls sehr vorteilhaft ist es erfindungsgemäß, wenn der separate Zylinder zwei oder mehr Verbrennungszylinder versorgt.

Damit wird die Effektivität noch gesteigert.

Desweiteren hat es sich gemäß einer Ausgestaltung der Erfindung als sehr vorteilhaft erwiesen, wenn ein Turbolader oder Roots-Gebläse vorgesehen ist.

Damit ist auch eine sehr gute Vorverdichtung erzielbar, ohne die Temperatur der Ansaug- bzw. Spülluft zu stark zu erhöhen. Die Zwischenschaltung eines Intercoolers ist vor allem dann denkbar, wenn die Ansaugluft auch zum Kühlen des Brennraumes genutzt wird.

Eine weitere sehr vorteilhafte Ausgestaltung liegt auch vor, wenn für die Spülung ein Fluid, insbesondere ein Gas, vorzugsweise Luft vorgesehen ist.

Damit kann auch beim Spülen noch mechanische Energie gewonnen werden.

Erfindungsgemäß ist es auch sehr vorteilhaft, wenn ein Wärmetauscher zur Erwärmung des Fluids durch die Abwärme des Verbrennungsprozesses vorgesehen ist.

Damit kann die Abwärme des Verbrennungsprozesses sehr gut und effektiv genutzt werden.

Im folgenden wird die Erfindung anhand eines Ausführungsbeispiels veranschaulicht.

Dabei zeigen:
- Fig. 1: eine schematische Konstruktion eines erfindungsgemäßen Verbrennungsmotors in den zusätzlich in einem eigenen Takt ein Fluid eingebracht wird, das dort expandiert und Arbeit verrichtet,

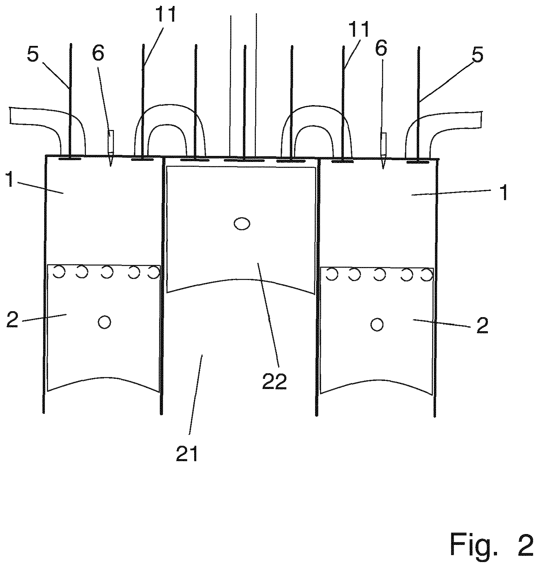

- Fig. 2: eine schematische Konstruktion einer Vorverdichtungszylinders,

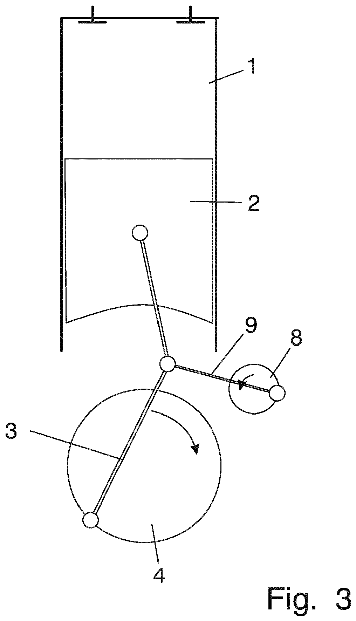

- Fig. 3: eine schematische Darstellung eines in der Erfindung eingesetzten Knickpleuels,

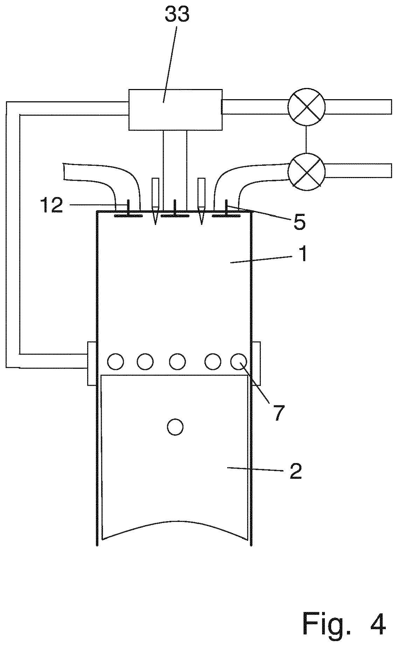

- Fig. 4: eine schematische Darstellung einer Konstruktion mit einem Druckspeicher,

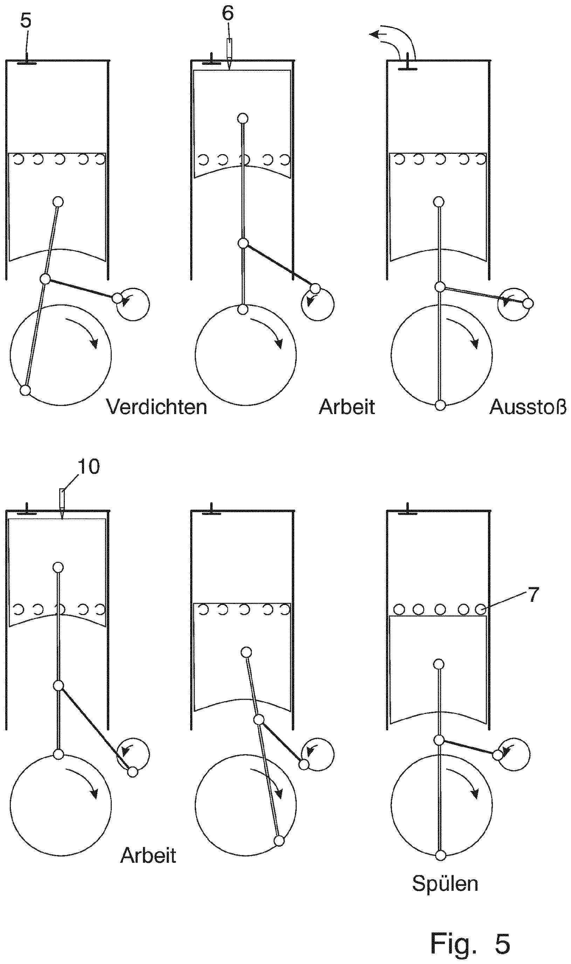

- Fig. 5: eine schematische Darstellung des Ablaufes aller Arbeitstakte des Motors,
- Fig. 6: eine schematische Darstellung einer weiteren Ausgestaltung des Arbeitsablaufes des Motors, und

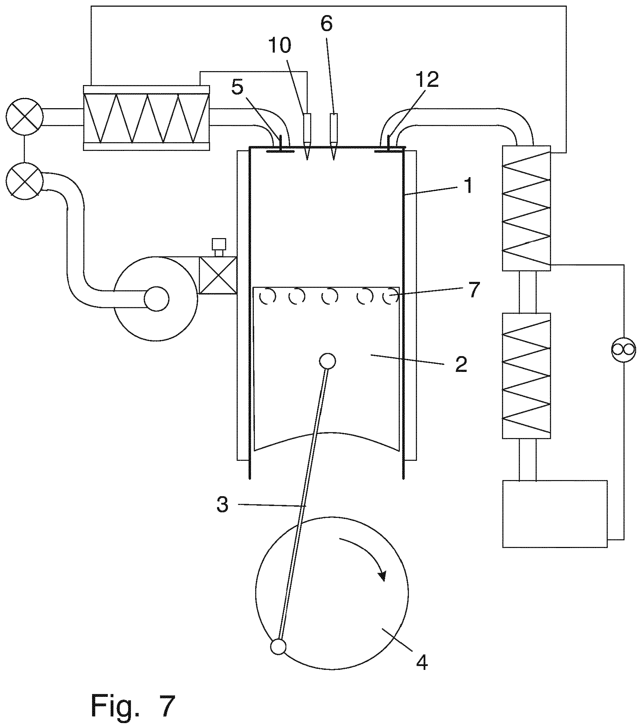

- Fig. 7: eine schematische Darstellung eines doppelt aufgeladenen, erfindungsgemäßen Motors.

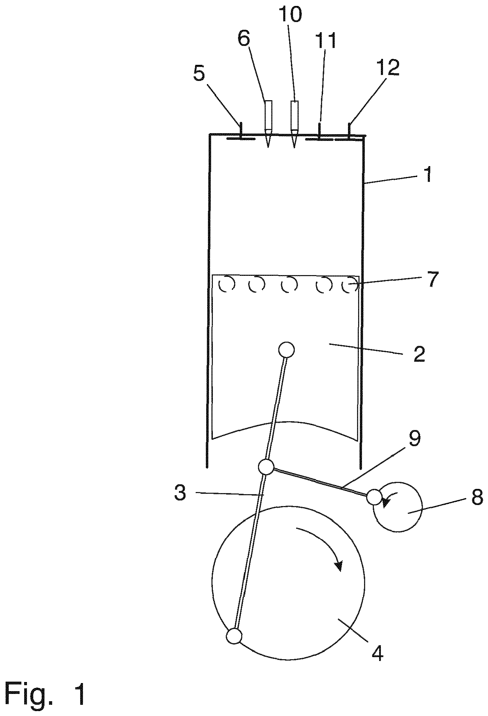

Mit 1 ist in Fig. 1 ein Zylinder eines Verbrennungsmotors bezeichnet, dem ein Kolben 2 zugeordnet ist. Der Kolben 2 ist über ein Pleuel 3 mit einer Kurbelwelle 4 verbunden.

Am von der Kurbelwelle 4 abgewandten Ende des Zylinders 1 ist ein Auslassventil 5 vorgesehen, durch welches heiße Abgase zu entweichen vermögen.

Zusätzlich ist eine Einspritzdüse 6 für Kraftstoff vorgesehen. Beim bei diesem Ausführungsbeispiel eingesetzten Kraftstoff handelt es sich um Dieselkraftstoff. Es ist aber auch denkbar, daß andere Kraftstoffe wie zum Beispiel Benzin, Heizöl, Pflanzenöle, Alkohole oder gasförmige Kraftstoffe eingesetzt werden.

Am unteren Ende des durch den Hub des Kolbens 2 definierten Brennraums im Zylinder 1 sind am Umfang des Zylinders 1 mehrere Öffnungen 7 vorgesehen, die in den meisten Betriebszuständen des Motors durch den Kolben verschlossen sind.

Das Pleuel 3 ist in diesem Ausführungsbeispiel als Knickpleuel ausgebildet, dessen resultierende Länge durch einen mit einem Exzenter 8 versehenen Hebel 9 verändert werden kann.

Ein so aufgebauter Verbrennungsmotor funktioniert nun wie folgt.

Im ersten Arbeitstakt, zu dessen Beginn der Kolben 2 im unteren Totpunkt steht, und das Pleuel 3 seine kleinste resultierende Länge aufweist, wird zuvor durch die Öffnungen 7 eingeleitete Verbrennungsluft komprimiert, indem der Kolben nach oben gedrückt wird und dabei das Pleuel 3 auf seine größte Länge gebracht wird. Kraftstoff wird durch die Einspritzdüse 6 eingespritzt. Das komprimierte Luft-Kraftstoffgemisch entzündet sich bzw. wird durch eine nicht dargestellte Zündkerze von extern entzündet. Im zweiten Arbeitstakt wird durch die Expansion des entzündeten Gemisches der Kolben 2 nach unten gedrückt und Arbeit verrichtet. Im dritten Takt wird der Kolben 2 wieder nach oben bewegt und über das geöffnete Auslassventil 5 das heiße Abgas ausgestoßen.

Im oberen Totpunkt angekommen wird das Auslassventil 5 geschlossen und über eine zweite Einspritzdüse 10 ein überhitztes Fluid eingespritzt. Das Fluid expandiert und verrichtet dabei Arbeit, indem der Kolben 2 nach unten gedrückt wird.

Zum Ende des vierten Taktes befindet sich das Pleuel 3 in seine kürzesten Position, so daß der Kolben 2 weiter nach unten gelangen kann als im zweiten Takt. Dabei werden die Öffnungen 7 freigegeben. Durch diese kann das expandierte Fluid entweichen. Zusätzlich wird neue Verbrennungsluft eingeblasen und damit auch das expandierte Fluid ausgetrieben.

Durch die Expansion des Fluids wird nicht nur der Brennraum gekühlt, sondern auch der Wirkungsgrad des Motors verbessert.

Das überhitzte Fluid kann zum Beispiel in hier nicht dargestellter Weise durch die heißen Abgase erwärmt werden. Als Fluid kann Wasser, ein Wasser-Ammoniak-Gemisch, ein Silikonöl oder jedes andere Fluid eingesetzt werden, das den Anforderungen an Siedepunkt und Verflüssigungstemperatur genügt.

Das Austreiben des expandierten Fluides und das gleichzeitige Einleiten von neuer Verbrennungsluft stellt einen fünften Arbeitstakt dar, der dem vierten Arbeitstakt, der Expansion des Fluides überlagert ist.

Die resultierende Länge des Pleuels 3 wird während dem Ablauf eines vollständigen Zykluses, bestehend aus den fünf Takten kontinuierlich verändert. Dies kann über den Exzenter 8 und den Hebel 9 erfolgen. Der Exzenter 8 kann sich dabei im Verhältnis 1:2 zur Kurbelwelle 4 drehen.

Abwandlungen des Aufbaus sind denkbar.

So ist es denkbar, daß zusätzlich noch ein Einlassventil 11 vorgesehen ist, durch welches die Verbrennungsluft in den Zylinder 1 einströmen kann. Auch denkbar ist es, daß ein weiteres Auslassventil 12 vorgesehen ist, über welches das expandierte Fluid ausgeleitet werden kann.

Im vorbeschriebenen Beispiel wird über die Bewegung des Kolbens 2 bestimmt, zu welchen Zeitpunkten die Öffnungen 7 verschlossen bzw. offen sind. Es ist aber auch denkbar, daß über gesonderte Ventile die Öffnungen 7 freigegeben oder geschlossen werden. Bei dieser Konstruktion kann sehr präzise gesteuert werden, wann die Öffnungen offen oder geschlossen sind. Zudem sind Veränderungen je nach Betriebszustand denkbar.

Es ist in diesem Zusammenhang auch denkbar, daß die Öffnungen 7 einzeln oder in Gruppen ansteuerbar sind und/oder auch einzeln oder in Gruppen zum Einleiten von Verbrennungsluft und/oder Ausleiten von expandiertem Fluid dienen können.

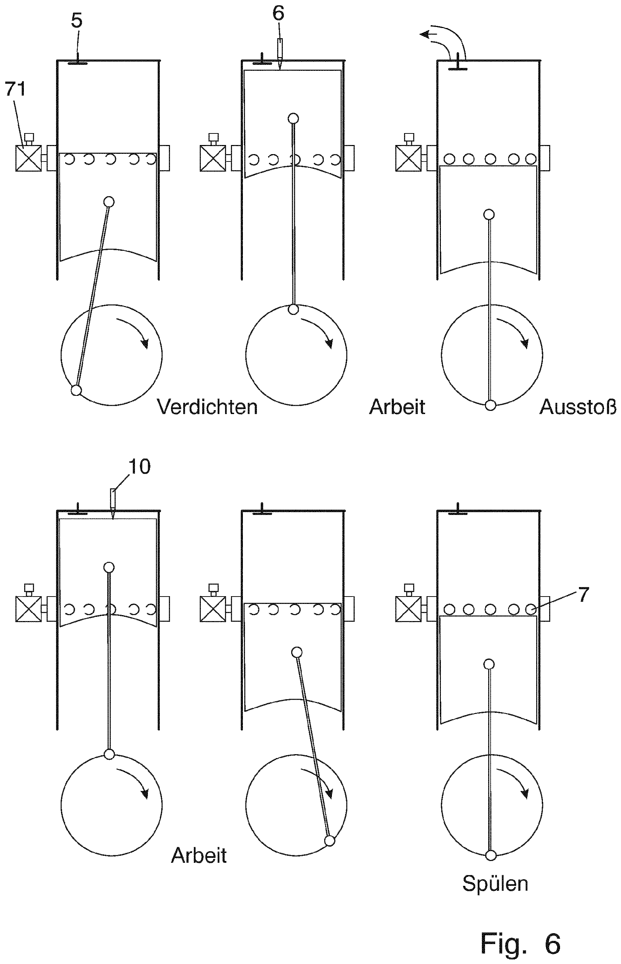

Ein Beispiel einer solchen abgewandelten Ausgestaltung ist in Fig. 6 dargestellt. Dort wird durch die Öffnungen 7 Verbrennungsluft eingeleitet. Die Öffnungen 7 können dabei ständig geöffnet sein. Der Zufluss von Verbrennungsluft wird durch externe Ventile 71 gesteuert. Dabei kann die Verbrennungsluft auch durch ein Rootsgebläse oder einen Turbolader oder dergleichen vorverdichtet werden. Ein vorgeschalteter Intercooler zur Senkung der Temperatur der Verbrennungsluft ist ebenfalls denkbar. Zudem ist es hier denkbar, daß die Öffnungen 7 zur Ableitung der Abgase und zur Ableitung entspannten Fluids genutzt werden können.

Die über die Öffnungen 7 zugeführte Verbrennungsluft kann auch den Brennraum umspülen und so den Motor kühlen. Hierzu können beispielsweise bekannte Kühlwasserkanäle genutzt werden. Ein herkömmlicher, wassergekühlter Motorblock kann dadurch auf Luftkühlung umgerüstet werden. Alleine und ohne die weitere Maßnahme der Fluideinspritzung wäre dies allerdings nicht möglich. Nur in Kombination kann die Brennraumtemperatur so weit gesenkt werden, daß eine Luftkühlung möglich wird. Andernfalls müssten erhebliche weitere konstruktive Maßnahmen ergriffen werden. Das Ventil bzw. die Ventile 71 können mechanisch, elektrisch, hydropneumatisch, hydraulisch oder anderweitig gesteuert werden. Die Steuerung kann sehr flexibel und anpassbar ausgestaltet sein.

Zusätzlich kann bei einer solchen Ausgestaltung auch auf eine Veränderung der Pleuellänge verzichtet werden. Eine kombinierte Ausgestaltung ist denkbar.

Je nach Zylindergeometrie und Anordnung der Öffnungen 7 der Auslassventile 5 bzw. 12 und der Einlassventile 11 wird eine sehr gute Zylinderfüllung erreicht und eine Durchmischung zwischen Fluid, Verbrennungsluft und Abgasen vermieden.

Die Ventile 5, 11 und 12 und auch die Öffnungen 7 können dabei beispielsweise über Nocken, Stößel oder dergleichen direkt oder indirekt von der Kurbelwelle 4 gesteuert werden. Bei einer direkten oder indirekten Steuerung ist auch eine Veränderung der Steuerzeiten in gewissen Grenzen möglich. Grenzen sind durch die eingesetzte Mechanik vorgegeben.

Es ist dabei aber auch denkbar, daß die Ventile 5, 11 und 12 und auch die Öffnungen 7 piezoelektrisch, hydraulisch oder auch pneumatisch gesteuert werden, wodurch diese unabhängig von der Kurbelwelle steuerbar sind.

Es kann somit noch besser auf unterschiedliche Betriebszustände des Motors eingegangen werden.

Zudem lassen sich die Steuerzeiten hochpräzise einstellen und anwenden.

All dies trägt zu einer erheblichen Verbesserung des Wirkungsgrades des Motors bei, da vor allem die beim Verbrennungsprozesses anfallende Abwärme unter Zuhilfenahme des Fluids in Arbeit umgesetzt werden kann. Zudem wird die Zylinderfüllung durch die innere Kühlung durch die Expansion des Fluides verbessert und somit auch der Verbrennungsprozesses selbst optimiert.

Anstatt eines Knickpleuels kann auch ein herkömmliches Pleuel 3 eingesetzt werden. Die Verstellung der resultierenden Länge kann dann beispielsweise durch ein in der Kurbelwelle angeordnetes Planetengetriebe realisiert werden. Ein solches Planetengetriebe kann den Kurbelwellenzapfen, an dem das Pleuel 3 gelagert ist, in seiner Position relativ zur Kurbelwellenposition verstellen.

Die Kopplung zwischen Längenverstellung des Pleuels 3 und der Kurbelwelle 4 kann starr erfolgen, oder aber verstellbar. Eine verstellbare Kopplung kann beispielsweise von aussen durch mechanische oder elektronische Eingriffe gesteuert werden.

Gemäß einem weiteren Ausführungsbeispiel kann auch ein sogenannter Vorverdichtungszylinder 21 vorgesehen sein, der im Zusammenspiel mit einem Kolben 22 die für die Verbrennungszylinder 1 benötigte Spül- und Verbrennungsluft vorverdichtet. Diese vorverdichtete Luft kann in kürzeren Zeitspannen in die Zylinder geleitet werden. Es ergibt sich dadurch eine bessere Zylinderfüllung. Dies ist zwar derselbe Effekt, wie bei einem Turbolader, jedoch ist der Betrieb eines Turboladers auf die Ausnutzung des Abgasstromes begrenzt. Zudem sind die hohen, im Turbolader auftretenden Temperaturen problematisch.

Der Vorverdichtungszylinder 21 umgeht diese Problematik. Vielmehr kann mit geringem Energieaufwand die Verbrennungs- und Spülluft vorverdichtet werden. Eine Kombination mit einem Turbolader und/oder einem Rootsgebläse ist denkbar.

Es ist denkbar, daß der Vorverdichtungszylinder 21 ein Volumen aufweist, das einem Vielfachen des Volumens eines Verbrennungszylinders 1 entspricht, so daß der Vorverdichtungszylinder 21 mehrere Zylinder 1 versorgen kann. Ein doppelt so großes Volumen des Vorverdichtungszylinders 21 gegenüber den Verbrennungszylindern 1 hat sich als besonders effizient erwiesen.

Bei gleichem Hub bedeutet dies, daß der Durchmesser eines Verbrennungszylinders das 0,7-fache des Durchmessers des Vorverdichtungszylinders 21 aufweist.

Zudem ist es gemäß einem weiteren Ausführungsbeispiel denkbar, daß ein Druckspeicher 33 vorgesehen ist, über den wenigstens ein Teil des Abgases, der Spülluft, des entspannten Fluides und/oder einer Mischung daraus aufzunehmen vermag und beim Spülen des Zylinders 1 durch die Öffnungen 7 wiederverwendet. Der Druckspeicher 33 kann dabei von einem Vorverdichterzylinder 21, einem Turbolader, einem Roots-Gebläse, einem Kompressor und/oder dem Verbrennungsraum direkt beschickt werden. Kombinationen sind denkbar.

Wenn der Druckspeicher 33 in direkter Wechselwirkung mit dem Brennraum steht und durch diesen beschickt wird, ist ein Ventil zwischen Brennraum und Druckspeicher 33 vorzusehen. Wenn nun Spülluft in den Brennraum eingeleitet wird, kann der Druckspeicher 33 beim Ausstoßen der Spülluft mit der Spülluft ganz oder teilweise beschickt werden. Beim Ausstoßen der Abgase aus dem Brennraum kann nun das Ventil zwischen Druckspeicher 33 und Brennraum geöffnet werden. Die unter Druck stehende Spülluft aus dem Druckspeicher 33 unterstützt nun das Ausstoßen der Abgase durch das Auslassventil.

Das eingesetzte Fluid kann in einem geschlossenen Kreislauf genutzt werden, wobei dann das entspannte Fluid zum Beispiel durch weitere Abkühlung in einem Rekuperator oder durch Verdichtung wieder verflüssigt wird. Anschließend wird das Fluid wieder durch einen Wärmetauscher von der Abwärme des Verbrennungsmotors erwärmt und steht damit einer erneuten Einspritzung zur Verfügung.

Gerade das Fluid kann über ein Rail mit elektrisch gesteuerten Einspritzdüsen eingespritzt werden. Bei den Kraftstoffen kann dies auch auf diese Art erfolgen. Aber auch mechanische Einspritzverfahren sind ebenso denkbar, wie auch Gasmischer, Vergaser oder dergleichen. Das verwendete Verfahren ist dabei stark von den eingesetzten Kraftstoffen abhängig.

Das erfindungsgemäße Prinzip kann nicht nur bei Hubkolbenverbrennungsmaschinen eingesetzt werden. Es ist auch denkbar, daß Rotationskolbenmaschinen mit dem erfindungsgemäßen Prinzip ausgerüstet werden. Durch die Senkung der Brennraumtemperaturen kann die Standfestikeit solcher Rotationskolbenmaschinen deutlich verbessert werden, die bei bekannten Rotationskolbenmaschinen, insbesondere bei Wankelmotoren derzeit deutlich zu wünschen übrig lässt.

Insgesamt wird durch die vorliegende Erfindung die Materialbelastung durch Senkung der Verbrennungstemperaturen deutlich senken. Die innere Brennraumkühlung sorgt auch dafür, daß ein Großteil der bislang entstehenden Abwärme noch genutzt und in mechanische Arbeit umgewandelt werden kann. Es werden hierzu nicht nur die Prinzipien einer Verbrennungskraftmaschine mit denen einer Expansionskraftmaschine kombiniert. Es werden auch Anlehnungen an das Prinzip des Stirling Motors gemacht.

Mit der vorliegenden Erfindung lassen sich nicht nur mobile Antriebsmotore mit gutem Wirkungsgrad herstellen, sondern vor allem Stationärmotore vor allem für den Einsatz in BHKWs. Gerade dort kann die nicht durch das Fluid nutzbare in der Abwärme enthaltene Energie noch zum Beispiel für Heizzwecke eingesetzt werden. Ebenso kann die im entspannten Fluid enthaltene Restenergie für diese Zwecke genutzt werden.

Mit der vorliegenden Erfindung sind Wirkungsgradsteigerungen in Bezug zu herkömmlichen Verbrennungskraftmaschinen von 50% und mehr möglich, bezogen auf die mechanische Arbeit, die aus dem Kraftstoff gewonnen werden kann. Es ist nach vorläufigen Untersuchungen davon auszugehen, daß der Wirkungsgrad bis nahe an den Carnot-Wirkungsgrad herangeführt werden kann. Die verbleibende Abwärme kann zu Heizzwecken genutzt werden. Die eingesetzte Primärenergie wird damit nahezu vollständig genutzt, wobei gegenüber bekannten Blockheizkraftwerken das bislang ungünstige Verhältnis zwischen mechanischer bzw. elektrischer Leistung und Wärmeleistung deutlich in Richtung der mechanischen bzw. elektrischen Leistung verschoben werden kann.

Die Rentabilität eines BHKW wird damit deutlich gestigert.

Vor allem wird dem großen Problem begegnet, wohin mit der anfallenden Wärme in den Sommermonaten.

## Patentansprüche

1. Verfahren zum Betrieb eines Viertakt-Verbrennungsmotor, mit wenigstens einem Brennraum und einem jedem Brennraum zugeordneten Kolben (2), einem oder mehreren Einlass- (11) und Auslassventilen (5), wobei wenigstens eine Einspritzdüse (6) und und vorzugsweise eine Zündeinrichtung vorgesehen ist und wobei eine Einspritzvorrichtung (10) für ein weiteres Fluid und eine zusätzliche Auslasseinrichtung (7) in der Zylinderwand im Bereich des unteren Totpunktes für das weitere entspannte Fluid vorgesehen ist, wobei die Einspritzvorrichtung (10) und die zusätzliche Auslasseinrichtung (7) eine Spülvorrichtung für den/die einzelnen Brennräume bilden, **dadurch gekennzeichnet, dass** die Abfolge der Arbeitsschritte derart vorgesehen ist, dass in einem ersten Arbeitstakt Verbrennungsluft komprimiert wird, im Bereich des oberen Totpunktes Kraftstoff eingespritzt und gezündet wird, im zweiten Arbeitstakt das Verbrennungsgas expandiert, im dritten Arbeitstakt das heiße Verbrennungsgas durch das Auslassventil (5) ausgestoßen wird, nach Ausstoß der heißen Verbrennungsgase, also nach Beendigung des dritten Arbeitstaktes im oberen Totpunkt das Auslassventil (5) geschlossen und das weitere, überhitzte Fluid eingespritzt und nach der Expansion, zum Ende des vierten Arbeitstaktes, mittels der Spülvorrichtung im expandierten Zustand aus dem Zylinder durch Einblasen neuer Verbrennungsluft ausgetrieben wird.

2. Verbrennungsmotor zur Ausführung eines Verfahrens nach Anspruch 1, mit wenigstens einem Brennraum und einem jedem Brennraum zugeordneten Kolben (2), einem oder mehreren Einlass- (11) und Auslassventilen (5), wobei wenigstens eine Einspritzdüse (6) und vorzugsweise eine Zündeinrichtung vorgesehen ist und wobei eine Einspritzvorrichtung (10) für ein weiteres Fluid und eine zusätzliche Auslasseinrichtung (7) in der Zylinderwand im Bereich des unteren Totpunktes für das weitere entspannte Fluid vorgesehen ist, wobei die Einspritzvorrichtung (10) und die zusätzliche Auslasseinrichtung (7) eine Spülvorrichtung für den/die einzelnen Brennräume bilden, **dadurch gekennzeichnet, dass** die Abfolge der Arbeitsschritte derart vorgesehen ist, dass in einem ersten Arbeitstakt Verbrennungsluft komprimiert wird, im Bereich des oberen Totpunktes Kraftstoff eingespritzt und gezündet wird, im zweiten Arbeitstakt das Verbrennungsgas expandiert, im dritten Arbeitstakt das heiße Verbrennungsgas durch das Auslassventil (5) ausgestoßen wird, nach Ausstoß der heißen Verbrennungsgase, also nach Beendigung des dritten Arbeitstaktes im oberen Totpunkt das Auslassventil (5) geschlossen und das weitere, überhitzte Fluid eingespritzt und nach der Expansion, zum Ende des vierten Arbeitstaktes, mittels der Spülvorrichtung im expandierten Zustand aus dem Zylinder durch Einblasen neuer Verbrennungsluft ausgetrieben wird.

3. Verbrennungsmotor nach Anspruch 2, **dadurch gekennzeichnet, daß** der Brennraum als Zylinder und der Kolben als Hubkolben ausgebildet ist, dem eine Kurbelwelle zugeordnet ist, die mit Pleueln miteinander verbunden sind und so ein Hubkolbenmotor geschaffen wird.

4. Verbrennungsmotor nach einem der Ansprüche 2 oder 3, **dadurch gekennzeichnet, daß** die Einlass- und/oder Auslassvorrichtung für entspanntes Fluid als Öffnungen in der Zylinderwandung ausgebildet ist, wobei die Einlassund/oder Auslassvorrichtung durch den Hubkolben und/oder durch Ventile gesteuert werden können.

5. Verbrennungsmotor nach einem der Ansprüche 2 bis 4, **dadurch gekennzeichnet, daß** der Anlenkpunkt der Pleuel an der Kurbelwelle mit einem Exzenter, einem Planetenradgetriebe oder dergleichen versehen ist, wobei der Exzenter bzw. das Planetenradgetriebe durch die Drehung der Kurbelwelle und/oder von außen steuerbar ausgebildet sein kann.

6. Verbrennungsmotor nach einem der Ansprüche 2 bis 5, **dadurch gekennzeichnet, daß** ein Knickpleuel vorgesehen ist, mit dessen Hilfe die effektive Pleuellänge einstellbar ist.

7. Verbrennungsmotor nach einem der Ansprüche 2 bis 6, **dadurch gekennzeichnet, daß** eine Einrichtung vorgesehen ist, die die Pleuellänge im Verhältnis bis etwa 1:2 zur Kurbelwellenumdrehung in ihrer Länge verändert.

8. Verbrennungsmotor nach einem der Ansprüche 2 bis 7, **dadurch gekennzeichnet, daß** Ventile für das entspannte Fluid vorgesehen sind.

9. Verbrennungsmotor nach einem der Ansprüche 2 bis 8, **dadurch gekennzeichnet, daß** die Ventile mechanisch gesteuert ausgebildet sind, beispielsweise über eine oder mehrere Nockenwellen und/oder daß die Ventile elektrisch, piezoelektrisch, elektromechanisch, hydraulisch und/oder pneumatisch gesteuert ausgebildet und damit einzeln ansteuerbar ausgebildet sind.

10. Verbrennungsmotor nach einem der Ansprüche 2 bis 9, **dadurch gekennzeichnet, daß** die Verbrennungsluft über Öffnungen in der Brennraumwandung zugeführt wird, wobei die Öffnungen durch den Kolben und/oder Ventile verschlossen und geöffnet werden können, wobei die Ventile auch extern angeordnet sein können.

11. Verbrennungsmotor nach Anspruch 10, **dadurch gekennzeichnet, daß** die Verbrennungsluft den Brennraum wenigstens teilweise umspült, bevor diese in den Brennraum geleitet wird.

12. Verbrennungsmotor nach einem der Ansprüche 2 bis 11, **dadurch gekennzeichnet, daß** eine Einrichtung zur Vorverdichtung von Spül- bzw. Ansaugluft vorgesehen ist, wobei diese Einrichtung als separater Zylinder ausgebildet oder ein Turbolader oder Roots-Gebläse vorgesehen sein kann.

13. Verbrennungsmotor nach Anspruch 12, **dadurch gekennzeichnet, daß** der separate Zylinder das doppelte oder mehrfache Volumen eines Verbrennungszylinders aufweist, wobei der separate Zylinder zwei oder mehr Verbrennungszylinder versorgen kann.

14. Verbrennungsmotor nach einem der Ansprüche 12 oder 13, **dadurch gekennzeichnet, daß** für die Spülung ein Fluid, insbesondere ein Gas, vorzugsweise Luft vorgesehen ist.

15. Verbrennungsmotor nach einem derAnsprüche 2 bis 14, **dadurch gekennzeichnet, daß** ein Wärmetauscher zur Erwärmung des Fluids durch die Abwärme des Verbrennungsprozesses vorgesehen ist.

## Claims

1. Method of operating a four-stroke internal combustion engine, with at least one combustion chamber and a piston (2) associated with each combustion chamber, one or more inlet (11) and exhaust (5) valves, wherein at least one injection nozzle (6) and preferably an ignition device are provided and wherein an injection device (10) for a further fluid and an additional outlet device (7) in the cylinder wall in the region of the lower dead centre for the further fluid in expanded state are provided, wherein the injection device (10) and the additional outlet device (7) form a scavenging device for the individual combustion chamber or chambers, **characterised in that** the sequence of working steps is provided in such a way that in a first work cycle combustion air is compressed and fuel is injected in the region of the upper dead centre and ignited, in the second work cycle the combustion gas expands, in the third work cycle the hot combustion gas is expelled through the exhaust valve (5), after expulsion of the hot combustion gases, thus after the conclusion of the third work cycle, the exhaust valve (5) is closed at the top dead centre and the further fluid in superheated state is injected and after the expansion, at the end of the fourth work cycle, is expelled in expanded state from the cylinder by means of the scavenging device through injection of new combustion air.

2. Internal combustion engine for carrying out a method according to claim 1, with at least one combustion chamber and a piston (2) associated with each combustion chamber, one or more inlet (11) and exhaust (5) valves, wherein at least one injection nozzle (6) and preferably an ignition device are provided and wherein an injection device (10) for a further fluid and an additional outlet device (7) in the cylinder wall in the region of the lower dead centre for the further fluid in expanded state are provided, wherein the injection device (10) and the additional outlet device (7) form a scavenging device for the individual combustion chamber or chambers, **characterised in that** the sequence of working steps is provided in such a way that in a first work cycle combustion air is compressed and fuel is injected in the region of the upper dead centre and ignited, in the second work cycle the combustion gas expands, in the third work cycle the hot combustion gas is expelled through the exhaust valve (5), after expulsion of the hot combustion gases, thus after the conclusion of the third work cycle, the exhaust valve (5) is closed at the top dead centre and the further fluid in superheated state is injected and after the expansion, at the end of the fourth work cycle, is expelled in expanded state from the cylinder by means of the scavenging device through injection of new combustion air.

3. Internal combustion engine according to claim 2, **characterised in that** the combustion chamber is configured as a cylinder and the piston as a reciprocating piston, with which a crankshaft is associated, these being connected together by connecting rods and thus a reciprocating piston engine is created.

4. Internal combustion engine according to one of claims 2 and 3, **characterised in that** the inlet device and/or outlet device for expanded fluid is or are configured as openings in the cylinder wall, wherein the inlet device and/or outlet device can be controlled by the reciprocating piston and/or by valves.

5. Internal combustion engine according to any one of claims 2 to 4, **characterised in that** the coupling point of the connecting rod to the crankshaft is provided with an eccentric, a planetary wheel transmission or the like, wherein the eccentric or the planetary wheel transmission can be constructed to be controllable by rotation of the crankshaft and/or from outside.

6. Internal combustion engine according to any one of claims 2 to 5, **characterised in that** an articulated connecting rod is provided, with the help of which the effective connecting rod length is settable.

7. Internal combustion engine according to any one of claims 2 to 6, **characterised in that** a device is provided which changes the connecting rod length in its length in a ratio up to approximately 1:2 with respect to crankshaft rotation.

8. Internal combustion engine according to any one of claims 2 to 7, **characterised in that** valves for the expanded fluid are provided.

9. Internal combustion engine according to any one of claims 2 to 8, **characterised in that** the valves are configured to be mechanically controlled, for example by way of one or more camshafts, and/or that the valves are configured to be electrically, piezoelectrically, electromechanically, hydraulically and/or pneumatically controlled and thus configured to be individually activatable.

10. Internal combustion engine according to any one of claims 2 to 9, **characterised in that** the combustion air is supplied via openings in the combustion chamber wall, wherein the openings can be closed and opened by the piston and/or valves and wherein the valves can also be arranged externally.

11. Internal combustion engine according to claim 10, **characterised in that** the combustion air at least partly flows around the combustion chamber before being conducted into the combustion chamber.

12. Internal combustion engine according to any one of claims 2 to 11, **characterised in that** a device for pre-compression of scavenging or suction air is provided, wherein this device can be constructed as a separate cylinder or can be provided as a turbocharger or Roots blower.

13. Internal combustion engine according to claim 12, **characterised in that** the separate cylinder has twice or several times the volume of a combustion cylinder, wherein the separate cylinder can supply two or more combustion cylinders.

14. Internal combustion engine according to one of claims 12 and 13, **characterised in that** a fluid, particularly a gas, preferably air, is provided for the scavenging.

15. Internal combustion engine according to any one of claims 2 to 14, **characterised in that** a heat exchanger for preheating the fluid through the waste heat of the combustion process is provided.

## Revendications

1. Procédé d'actionnement d'un moteur quatre temps à combustion interne comprenant au moins une chambre de combustion et un piston (2) affecté à chaque chambre de combustion, une ou plusieurs soupape(s) d'admission (11) et d'échappement (5), sachant qu'il est prévu au moins une buse d'injection (6) et, de préférence, un système d'allumage, et sachant qu'il est prévu un dispositif d'injection (10) dédié à un fluide supplémentaire et, dans la paroi cylindrique, dans la région du point mort bas, un système additionnel d'échappement (7) dédié audit fluide supplémentaire détendu, ledit dispositif d'injection (10) et ledit système additionnel d'échappement (7) formant un dispositif de purge dévolu à la/(aux) chambre(s) de combustion individuelle(s), **caractérisé par le fait que** l'ordre séquentiel des étapes opératoires est prévu de façon telle que, lors d'un premier cycle de travail, de l'air comburant soit comprimé et que du carburant soit injecté et enflammé dans la région du point mort haut ; que les gaz de combustion soient soumis à expansion lors du deuxième cycle de travail ; que les gaz de combustion chauds soient expulsés par l'intermédiaire de la soupape d'échappement (5), lors du troisième cycle de travail ; et qu'à l'issue de l'expulsion desdits gaz de combustion chauds, c'est-à-dire à l'achèvement dudit troisième cycle de travail audit point mort haut, ladite soupape d'échappement (5) soit fermée et le fluide supplémentaire surchauffé soit injecté et soit chassé du cylindre à l'état soumis à expansion, au moyen du dispositif de purge, à l'issue de l'expansion à la fin du quatrième cycle de travail, par insufflation d'un nouvel air comburant.

2. Moteur à combustion interne dévolu à la mise en oeuvre d'un procédé conforme à la revendication 1, comprenant au moins une chambre de combustion et un piston (2) affecté à chaque chambre de combustion, une ou plusieurs soupape(s) d'admission (11) et d'échappement (5), sachant qu'il est prévu au moins une buse d'injection (6) et, de préférence, un système d'allumage, et sachant qu'il est prévu un dispositif d'injection (10) dédié à un fluide supplémentaire et, dans la paroi cylindrique, dans la région du point mort bas, un système additionnel d'échappement (7) dédié audit fluide supplémentaire détendu, ledit dispositif d'injection (10) et ledit système additionnel d'échappement (7) formant un dispositif de purge affecté à la/(aux) chambre(s) de combustion individuelle(s), **caractérisé par le fait que** l'ordre séquentiel des étapes opératoires est prévu de façon telle que, lors d'un premier cycle de travail, de l'air comburant soit comprimé et que du carburant soit injecté et enflammé dans la région du point mort haut ; que les gaz de combustion soient soumis à expansion lors du deuxième cycle de travail ; que les gaz de combustion chauds soient expulsés par l'intermédiaire de la soupape d'échappement (5), lors du troisième cycle de travail ; et qu'à l'issue de l'expulsion desdits gaz de combustion chauds, c'est-à-dire à l'achèvement dudit troisième cycle de travail audit point mort haut, ladite soupape d'échappement (5) soit fermée et le fluide supplémentaire surchauffé soit injecté et soit chassé du cylindre à l'état soumis à expansion, au moyen du dispositif de purge, à l'issue de l'expansion à la fin du quatrième cycle de travail, par insufflation d'un nouvel air comburant.

3. Moteur à combustion interne selon la revendication 2, **caractérisé par le fait que** la chambre de combustion et le piston sont réalisés, respectivement, sous la forme d'un cylindre et d'un piston alternatif auquel un vilebrequin est associé, leur liaison mutuelle étant assurée par des bielles, créant ainsi un moteur à piston alternatif.

4. Moteur à combustion interne selon l'une des revendications 2 ou 3, **caractérisé par le fait que** le(s) dispositif(s) d'admission et/ou d'échappement, dédié(s) à du fluide détendu, se présente(nt) comme des orifices pratiqués dans la paroi cylindrique, le(s)dit(s) dispositif(s) d'admission et/ou d'échappement pouvant être commandé(s) par l'intermédiaire du piston alternatif, et/ou par l'intermédiaire de soupapes.

5. Moteur à combustion interne selon l'une des revendications 2 à 4, **caractérisé par le fait que** le point de rattachement articulé des bielles, sur le vilebrequin, est pourvu d'un excentrique, d'un engrenage planétaire ou d'un moyen similaire, sachant que l'excentrique ou l'engrenage planétaire peut être respectivement réalisé pour pouvoir être commandé par la rotation dudit vilebrequin, et/ou depuis l'extérieur.

6. Moteur à combustion interne selon l'une des revendications 2 à 5, **caractérisé par** la présence d'une bielle articulée, à l'aide de laquelle la longueur de bielle effective peut être réglée.

7. Moteur à combustion interne selon l'une des revendications 2 à 6, **caractérisé par** la présence d'un système modifiant la longueur de bielle suivant le rapport atteignant jusqu'à environ 1:2 vis-à-vis du tour complet du vilebrequin.

8. Moteur à combustion interne selon l'une des revendications 2 à 7, **caractérisé par** la présence de soupapes dédiées au fluide détendu.

9. Moteur à combustion interne selon l'une des revendications 2 à 8, **caractérisé par le fait que** les soupapes sont de réalisation à commande mécanique, par exemple au moyen d'un ou de plusieurs arbre(s) à cames ; et/ou **par le fait que** lesdites soupapes sont réalisées avec commande électrique, piézoélectrique, électromécanique, hydraulique et/ou pneumatique et sont conçues, en conséquence, avec faculté de pilotage individuel.

10. Moteur à combustion interne selon l'une des revendications 2 à 9, **caractérisé par le fait que** l'air comburant est délivré par l'intermédiaire d'orifices pratiqués dans la paroi de la chambre de combustion, lesdits orifices pouvant être occultés ou ouverts sous l'action du piston et/ou des soupapes, lesquelles soupapes peuvent aussi être implantées extérieurement.

11. Moteur à combustion interne selon la revendication 10, **caractérisé par le fait que** l'air comburant effectue, au moins partiellement, un balayage périphérique de la chambre de combustion avant d'être introduit dans ladite chambre de combustion.

12. Moteur à combustion interne selon l'une des revendications 2 à 11, **caractérisé par le fait qu'**un système est prévu pour la compression préalable d'air respectif de purge ou d'aspiration, sachant que ce système peut être réalisé sous la forme d'un cylindre distinct, ou bien qu'il peut être prévu un turbocompresseur ou une soufflante Roots.

13. Moteur à combustion interne selon la revendication 12, **caractérisé par le fait que** le cylindre distinct présente le double ou le multiple du volume d'un cylindre de combustion, ledit cylindre distinct pouvant alimenter des cylindres de combustion au nombre de deux ou plus.

14. Moteur à combustion interne selon l'une des revendications 12 ou 13, **caractérisé par le fait qu'**un fluide, notamment un gaz et préférentiellement de l'air, est prévu pour la purge.

15. Moteur à combustion interne selon l'une des revendications 2 à 14, **caractérisé par le fait qu'**un échangeur thermique est prévu pour le réchauffage du fluide sous l'effet de la chaleur résiduelle du processus de combustion.
